Europäisches Patentamt

European Patent Office

Office européen des brevets

(19)

(11) Publication number : **0 243 193**
**B1**

(12)

# EUROPEAN PATENT SPECIFICATION

(45) Date of publication of patent specification :
07.03.90

(21) Application number : 87303628.9

(22) Date of filing : 24.04.87

(51) Int. Cl.⁵ : **H 01 B 1/20,** H 01 B 5/14,
B 29 D 9/00, B 32 B 27/20,
D 02 G 1/18, D 04 H 11/04

(54) A conductive fabric and a conductive sheet and film.

(30) Priority : 24.04.86 JP 95799/86
15.04.87 JP 94096/87

(43) Date of publication of application :
28.10.87 Bulletin 87/44

(45) Publication of the grant of the patent :
07.03.90 Bulletin 90/10

(84) Designated contracting states :
BE DE FR GB IT NL

(56) References cited :
DE--B-- 1 002 724
US--A-- 3 849 242
US--A-- 4 532 099

(73) Proprietor : SEKISUI KAGAKU KOGYO KABUSHIKI
KAISHA
4-4 Nishitemma 2-chome
Kita-ku Osaka 530 (JP)

(72) Inventor : Wakahara, Hideki
1-2-33 Hamaohtsu
Ohtsu-shi Shiga-ken (JP)
Inventor : Matsuo,Yoshihiro
166-34 Harimada-cho
Moriyama-shi,Shiga-ken (JP)
Inventor : Kawamura,Minoru
2-4-5 Kuzuhamendori-cho
Hirakata-shi,Osaka (JP)

(74) Representative : Jones, Colin et al
W.P. THOMPSON & CO. Coopers Building Church
Street
Liverpool L1 3AB (GB)

## Description

This invention relates to a conductive fabric with a large spreading ratio, a method for the manufacture of conductive fabric, and a conductive sheet or film.

The trays, containers, packaging, etc., used for the packing or transport of electronic devices, such as semiconductor devices, which are in danger of being damaged as to their function by the invasion of static electricity or noise, and the filing cases, etc., which are used to store recording materials, such as magnetic discs, magnetic cards, etc., which are sensitive in the same way to static electricity and noise, must be prevented from being charged with electricity, and moreover need electrical conductivity to shield their contents from electromagnetic waves. For containers as mentioned above, moulded plastics containing carbon black and conductive fillers, such as short metal fibres, etc., have been put into practical use. However, to lend the desired conductivity to such plastic, it is necessary to use a large quantity of conductive filler, which causes the moulded parts to be moulded in an unsatisfactory way and causes a decrease in the mechanical strength.

To eliminate these problems, an inexpensive method for manufacturing conductive sheets for wrapping of parts such as IC, etc., has been proposed by, for example, JP-A-58-155917 and JP-A-58-166035, in which a non-woven fabric, a knit fabric, or a textile, made from a fibre mixture of conductive fibre and thermoplastic fibres is disposed on a base and heated to a temperature above the temperature at which the thermoplastic fibres melt, to adhere itself thereby to the base, resulting in a conductive sheet for wrapping of parts, such as IC, etc.

However, the conductive textile of the sheets made in the way described above cannot stretch, and, when the said sheet is treated by deep drawing processing by vacuum forming or pressure forming, the sheet is stretched and the conductive textile is ripped, which causes a lowering of the electrical conductivity of the resulting moulded article. Moreover, in sheets made from a non-woven fabric or a knit fabric manufactured by the method described above, a certain amount of stretching is made possible by the structure of the non-woven fabric or the knitting, but, when the sheet is treated by deep drawing processing by which the surface area before and after the non-woven fabric or the knitting is stretched (that is, the spreading ratio) becomes two times or more, the conductive non-woven fabric or knitting is ripped in the same way as with the textile, which causes a lowering of the electrical conductivity of the resulting moulded article. For this reason, there is the problem that it is not possible to make a container, etc., with a deep bottom that has superior conductivity from a flat sheet with a conductive fabric therein.

A conductive fabric according to this invention, comprises conductive fibres and thermoplastic fibres with a higher heat shrinkage than said conductive fibres, said fibres being twisted into at least one twisted thread such that after heat shrinkage of said thermoplastic fibres has occurred in the axial direction, said conductive fibres are curled in a spiral around said thermoplastic fibres.

In a preferred embodiment, the conductive fibres and the thermoplastic fibres are knitted or woven into a fabric.

A method for the manufacture of a conductive fabric from at least one thread in accordance with this invention, comprises imparting respective initial twists to conductive fibres and thermoplastic fibres having a higher heat shrinkage than the conductive fibres, twisting the fibres into at least one twisted thread, knitting or weaving the twisted thread or threads to form a knitted or woven fabric, forming gathers or pleats of a fixed size at the selvedges of the knitted or woven fabric so as to loosen the portion of the fabric between the selvedges, and by heating the entire area of said fabric, while the gathered or pleated selvedges of said fabric are held by pin tenters, until the loose portion of said fabric is tightened due to the heat shrinkage.

In a preferred embodiment, the number of initial twists imparted to the thermoplastic fibres is greater than the number of initial twists imparted to the conductive fibres.

In a preferred embodiment, the diameter of the thermoplastic fibres is greater than that of the conductive fibres.

A preferred embodiment uses a gathering apparatus which comprises supports for supporting the knitted or woven fabric at fixed intervals in the direction in which the fabric is continuously formed, and pushers for pushing the fabric towards the spaced supports in sequence to form gathers.

In one embodiment, the supports and said pushers are a pair of gears which mesh together.

In another embodiment, the supports are disposed on the outer surface of an endless belt.

The endless belt is preferably disposed in such a manner that the outer surface thereof faces one surface of the fabric.

The endless belt may be disposed in such a manner that the outer surface thereof moves at almost right angles to the fabric.

The pushers move back and forth from positions separated from the fabric to positions in which they fit into the spaces between the adjacent supports supporting the fabric thereon.

A conductive sheet or film according to this invention comprises a conductive fabric composed of conductive fibres and thermoplastic fibres having a higher heat shrinkage than the conductive fibres, said conductive fibres being crimped by heat shrinkage of said thermoplastic fibres, and a base on which said conductive fabric is disposed, said conductive fabric and said base which are laminated together being

2

fused into one piece by being heated at a temperature above the melting point of the thermoplastic fibres and melting said thermoplastic fibres.

In a preferred embodiment, the conductive fabric is a knitted or woven fabric.

In a preferred embodiment, the base is a sheet or film of synthetic resin.

The invention described herein makes possible the objects of (1) providing a conductive fabric which has a large spreading ratio ; (2) providing a conductive fabric which, by simply being fixed onto a sheet as base, is superior in its ability to prevent charging with electricity and the ability to shield from electromagnetic waves ; (3) providing a method for the safe and continuous manufacture of a conductive fabric with a large spreading ratio ; (4) providing a conductive sheet or film whose conductive fibres are not ripped even when the sheet is treated by deep drawing processing by which the surface area before and after the sheet is stretched (i. e., the spreading ratio becomes two times or more) ; (5) providing a conductive sheet or film which can be formed into a container, etc., having a deep bottom and having the ability to prevent charging with electricity and the ability to shield the contents from electromagnetic radiation.

The invention is further described, by way of example, with reference to the accompanying drawings, in which :

Fig. 1 is plan view showing a part of an electrically conductive fabric of this invention ;

Fig. 2 is a schematic diagram showing the manufacturing process for the conductive fabric ;

Fig. 3 is a schematic diagram showing knitting forming the conductive fabric of this invention ;

Fig. 4 is a perspective view showing an apparatus by which tape is attached to the conductive fabric ;

Fig. 5 is a side view showing a gathering apparatus used in carrying out the method of the invention ;

Fig. 6 is a schematic diagram showing a heating process for the conductive fabric ;

Fig. 7 is a plan view showing the shrinkage of a single twisted thread ;

Fig. 8 is a side view of another embodiment of gathering apparatus ;

Fig. 9(a) is a plan view of a further embodiment of gathering apparatus ;

Fig. 9(b) is a side view of the gathering apparatus of Fig. 9(a) ;

Fig. 10 is a perspective view of an electrically conductive sheet of this invention ;

Fig. 11 is a perspective view of another embodiment of electrically conductive sheet of this invention ;

Fig. 12 is a diagram showing the stretching of the conductive fibres constituting the conductive fabric ; and

Fig. 13 is a perspective view showing a moulded article obtained from the electrically conductive sheet.

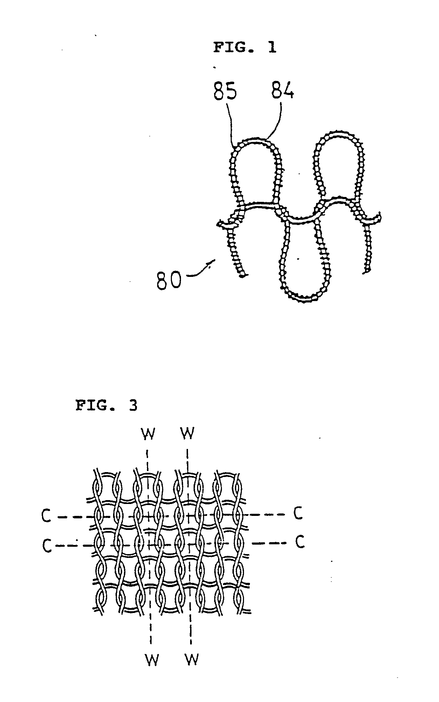

An electrically conductive fabric in accordance with one embodiment of this invention is, as is shown in Fig. 1, a fabric 80 formed as a textile or as knitting in such a manner that electrically conductive fibres 85 are crimped around the outside of the thermoplastic fibres 84.

Metallic fibres, carbon fibres, fibres of synthetic resin onto which metal ions are adsorbed, metal-plased synthetic resin fibres, etc, can be used as the conductive fibres 85 used in the conductive fabric 80 of this invention. The synthetic resin fibre onto which metal ions are adsorbed is prepared by adsorbing copper ions onto, for example, an acrylonitrile fibre and reducing it. The said synthetic resin fibre onto which metal ions have been adsorbed is particularly flexible, for which reason it is preferably used in this invention.

Fibres made of polyolefine resin, such as polyethylene, polypropylene, etc., polyamide resin, polyester resin, polyacrylonitrile resin, polyvinylchloride resin, polycarbonate resin, polymethyl methacrylate resin, etc., are suitable as the thermoplastic fibres 84. In particular, fibres should be chosen that have a greater heat shrinkage than the conductive fibre. When a transparent final product is required, it is particularly preferred to use resin fibres that are as transparent as resins or more transparent such as polyvinylchloride resin, polycarbonate resin, polymethyl methacrylate resin, etc., which are used as the base to be described below.

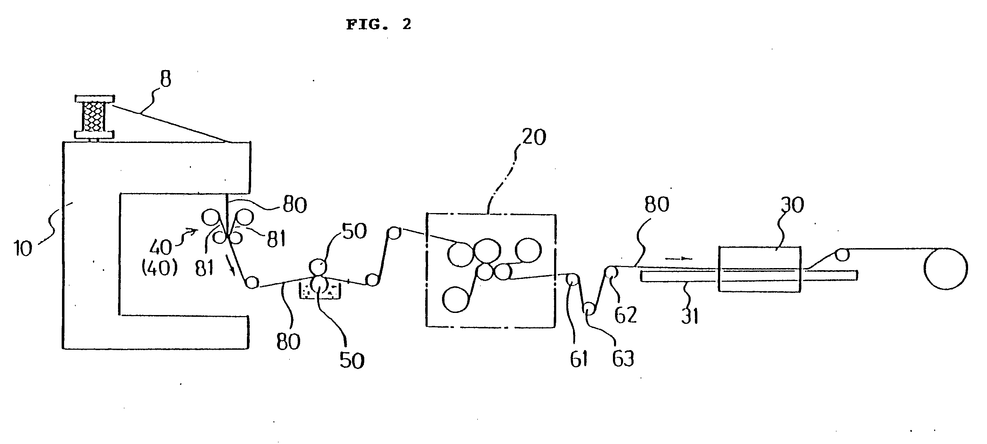

The electrically conductive fabric of this invention is manufactured by a method comprising the twisting of electrically conductive fibres and thermoplastic fibres with a greater heat shrinkage than the said conductive fibres into a single twisted thread ; the weaving or knitting of the single threads twisted together, as shown in Fig. 2, by means of a flat knitting machine 10 to continuously form a knitted fabric ; gathering of the knitting to continuously form gathers or pleats by a gathering apparatus 20 ; and heating of the gathered knitting by means of a furnace 30 so as to shrink the gathered knitting.

In the twisting process, first, at least one yarn made from conductive filaments or at least one spun yarn made from conductive staple fibres which has been given an initial twist, and at least one thermoplastic yarn made from thermoplastic resin which has been also given its initial twist are pulled out together and twisted with each other in the reverse direction (this is called the final twist), giving a finished twisted thread.

At this time, if the final twist has a large number of twists therein, the extent of crimping of the conductive fibre which is obtained by the succeeding processes becomes large, which is preferred. If the torsional stress used for the initial twist of the thermoplastic fibres is greater than that for the conductive fibres, the number of final twists of the conductive fibres twisted together in the thread so obtained is increased, and in the same way as mentioned above, the extent of crimping of the conductive fibres increases, which is preferred. That is, the number of final twists of the conductive fibres twisted together in the thread so obtained is set depending upon the condition wherein a balance of the torsional stress of the initial twist of these different fibres with the torsional stress of their final twist is maintained, and accordingly, when the torsional stress of the initial twist of the thermoplastic fibres is made large, the rebound force is added to the torsional stress of the final twist of the conductive fibres, so that the number of final twists of the conductive fibres becomes greater than that before the rebound force is added to the conductive fibres. In this case, as methods to increase the torsional stress, the numbers of twists can be made greater, or the diameter of the fibres can be made larger.

The twisted thread 8, obtained in this way is supplied to the flat knitting machine 10 of the knitting process, by which the thread 8 is continuously formed into, for example, a knitted fabric.

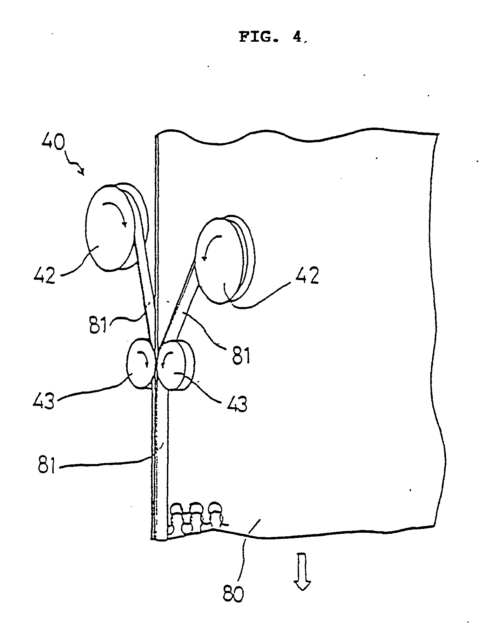

To obtain such a knitting, not only can a flat knitting machine 10 be used, but also a circular knitting machine, a warp knitting machine, etc. Knitting has a large spreading ratio, and, as shown in Fig. 3, if knitting is done so that the spacing W or the needle pitch or wales is about twice the spacing C of the courses, there is about the same amount of spreading horizontally and vertically, which is preferred.

The knitting 80 obtained from said flat knitting machine 10 has strips of adhesive tape 81 pasted onto both the upper and under sides of the selvedges by taping devices 40, as needed. Both of the taping devices 40 are disposed in the vicinity of the selvedges of the knitting 80 produced continuously by the flat knitting machine 10. As shown in Fig. 4, both taping devices 40 are provided with a pair of tape supply rolls 42, which are disposed so as to face the upper and under sides of the selvedges of the knitting 80, and a pair of presser rollers 43, which attach the strips of adhesive tape 81 supplied by the tape supply rolls 42 onto the upper side and under side in the vicinity of the selvedges of the knitting 80. The presser rollers 43 face each other in a manner to sandwich therebetween the selvedges of the knitting 80, and the strips of adhesive tape 81 from the tape supply rolls 42 are fed under pressure together with the selvedges of the knit 80 between the pushing rollers 43.

In this way, since the selvedges on both sides of the knitting 80 are pasted with strips of adhesive tape 81 immediately after being knitted, there is no danger of curling in the width direction of the selvedges, and even if the knitting 80 is pulled in the direction of its needle wales (that is, in the longitudinal direction of the knitting 80), there is no danger of shrinkage in the direction at right angles to said direction.

Such a knitting 80 is passed through a pair of coating rollers 50, if needed, by which the knitting 80 is coated with a solvent, such as THF which partially dissolves the thermoplastic fibres, so that the interstices of the knitting 80, that is, the points of intersection of the threads twisted together, dissolve, and become unified. This prevents the loss of any interstices in the knitting 80. In particular, during the succeeding heating process, even when a hot-air furnace is used, there is no danger of a loss of any interstices. Moreover, by the dissolving of a resin of the same variety as the thermoplastic fibres, with, for example, THF, the thermoplastic fibres and the conductive fibres are fixed more securely to each other, and in the succeeding heating process, the heat shrinkage of the thermoplastic fibres causes uniform, and fine crimping around the conductive fibres. Accordingly, when the fabric obtained is made to adhere with pressure to a sheet base of, e. g., polyvinylchloride, etc., by heating, the thermoplastic fibres are readily unified with the sheet base.

The knitting 80 coated with a solvent is dried, and then supplied to the gathering apparatus 20, which continuously forms gathers or pleats with a fixed size in the direction in which the knitting 80 is continuously formed. The gathering apparatus 20 comprises spaced supports for supporting at least one side of the two selvedges of the knitting 80 in the width direction with fixed intervals in the direction in which the knitting 80 is continuously formed, and pushers for pushing the knitting towards the spaced supports in sequence.

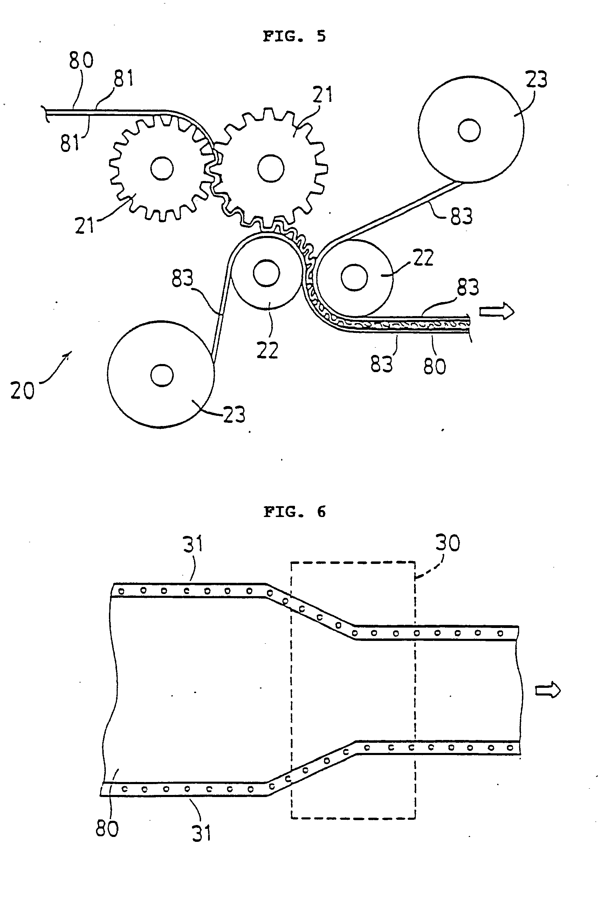

The gathering apparata 20 are disposed in the vicinity of both selvedges of the knitting 80 transported and one of the gathering apparata 20 has, as is shown in Fig. 5, for example, a pair of intermeshing gears 21 and a pair of pushing rollers 22. The gears 21 are placed so that the strips of adhesive tape 81 which have been pasted onto both selvedges of the knitting 80 are fed between the gears 21. The selvedge of the knitting 80 touches the surface of the tooth (i. e., the support) of one of the two gears, and is pushed down into the groove formed by the adjacent teeth by the teeth (i. e., pusher) of the other gear 21, resulting in a gather. By the formation of gathers along both selvedges of the knitting 80, gathers are formed across the entire surface of the knitting.

The knitting 80, which has been shaped into gathers, passes over one of the gears 21, and is supplied to the space between the opposing pressure rollers 22. The knitting 80 which has been formed into gathers moves along one of the gears 21, to be sandwiched between the pressure rollers 22. In order to prevent the selvedge of the knitting 80 from being separated from the gear teeth of said gear 21 until the knitting 80 is sandwiched between the pressure rollers 22, the gear 21 is preferably provided with an appropriate supporting means by which the gathers do not disappear.

Strips of adhesive tape 83 are supplied from the tape supply rolls 23 into the space between presser rollers 22, and pasted over the upper side and the under side of the strips of adhesive tape 81 on the knitting 80, which has been gathered, by being sandwiched between the presser rollers 22. The gathers that have been formed on both selvedges of the knitting 80 pass through the space between the pressing rollers 22, where the knitting 80 is pushed down in a direction opposite to the direction of the supply of the knitting 80.

The strips of adhesive tape 83 to be pasted on top of the strips of adhesive tape 81 which form the gathers function to prevent the gathers formed by the strips of adhesive tape 81 from disappearing by being stretched in the direction of supply of the knitting 80, and accordingly two such tapes 83 are not needed for pasting on both the upper side and the under side of the knitting 80. Thus, the gathering apparatus 20 can be designed to supply the adhesive tape 83 to be pasted on either or both of the upper and under sides of the knitting 80. A plurality of gathering apparata can be operated continuously depending upon the degree of crimping required.

The knitting 80 gathered by the gathering apparata 20 is guided by a pair of fixed rollers 61 and 62 through a dancing roller 63 disposed between fixed rollers 61 and 62 (Fig. 2), and is fed on to the heating process.

The heating process is carried out by pin tenters 31 and a furnace 30. The pin tenters 31 fasten onto the selvedges of the knitting 80, as shown in Fig. 6, with both selvedges in the downstream direction so that they are close to each other. In the downstream direction of the pin tenters 31, there is the furnace 30, and said furnace 30 heats the knitting 80 supplied by the pin tenters 31 to a temperature at which the thermoplastic fibres of the knitting 80 shrink.

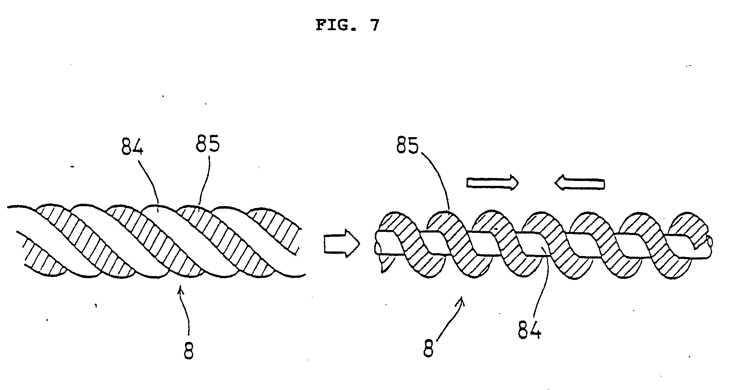

When the knitting 80 is heated in the furnace 30, the thermoplastic fibres in the thread twisted together of the knit 80 shrink, as shown in Fig. 7, because of the heat in the axial direction, and along with this heat shrinkage, the intervals between turns in the spiral of the conductive fibres 85, which have been twisted in a spiral, become smaller, and, as shown also in Fig. 1, the conductive fibres become curled in a spiral. When the conductive fibres become curled and shrunken (namely, become crimped) in this way, the knitting 80 also shrinks, but the shrinkage in the direction of the width of the knitting 80 is maintained, because the two selvedges of the knitting 80 are held by the pin tenters 31, at the space between the rows of the pin tenters 31. The said knitting 80 is shrunk until the gathers which have been formed in the knitting 80 are stretched out and disappear in the direction of the conveyance of the knitting 80 (i. e., the direction in which the knitting is continuously formed). That is, the shrinkage attained by heat-treatment of the knitting 80 in the direction in which it is being formed is regulated by the size and the number of the gathers formed in the knitting 80. Therefore, the shrinkage of the knitting 80 is regulated by the height and the number of the gear teeth of the gears 21 of the gathering apparata 20 used during the gathering process. In this way, the conductive fibres of the conductive knitting 80 can be crimped with the desired degree of crimping.

Thus, the conductive knitting 80, which is made of thread twisted together consisting of conductive fibres, crimped in a spiral with small intervals around the outside of the thermoplastic fibres, is produced continuously.

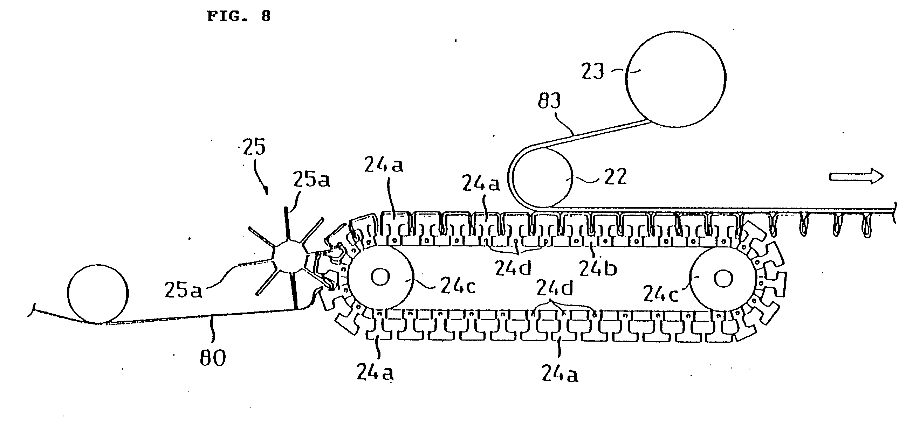

In the gathering process, the pair of gathering apparata 20 to be disposed for each of the two selvedges of the knitting are not limited to those provided with a pair of gears used in the above example, but can be those that comprise, as shown in Fig. 8, supports 24a disposed at the outer surface of an endless belt 24b which moves by rotation, and pushers 25 with pushing means 25a which radiate outwards. The endless belt 24b has, for example, a pair of pulleys 24c, by the turning of which the belt is conveyed. Each support 24a is lined upon the surface of the endless belt 24b in the direction of its movement, and is attached to the endless belt by, for example, pins 24d. Each support 24a is made of a soft or semihard rubber, for example. Its tip is wide in the direction of movement of the belt by rotation. The tips of the neighbouring supports 24a are made so as to have a small amount of space therebetween, and the surfaces of these tips touch the lower surface of the knitting 80 at its selvedges.

The pushers 25 have the outwardly radiating pushing means 25a which fit into the spaces between the supports 24a. The selvedges of the knitting 80 which is conveyed forward are pushed into the spaces between the supports 24a in order by pushing means 25a of the pushers 25 at the circular portion of the endless belt 24b near one of the pulleys 24c with which the belt 24b engages. In this circular portion, the space between the neighbouring supports 24a is larger than that at the other portions of the belt 24b, and thus the selvedges of the knitting 80 can be pushed into the space to form a gather. Then, the pushing means 25a of the pushers 25 is removed from the space between the supports 24a, and the selvedges of the knitting 80 which have been pushed into the said space are sandwiched between the neighbouring supports 24a ; there is no danger that they will come loose from the space therebetween.

A presser roller 22 which faces the surfaces of the tips of the supports 24a is disposed downstream in the direction of movement of the endless belt 24b. An adhesive tape 83, which is supplied from a tape supply roll 23, is fed to the space between the surfaces of the tips of the supports 24a and the presser roller 22, and the adhesive tape 83 is pasted onto the knitting 80 in which gathers have been formed along its selvedges.

In these gathering apparata 20, the gathered knitting 80 can be directly supplied to the heating process by the endless belt 24b without use of a dancing roller 63, etc.

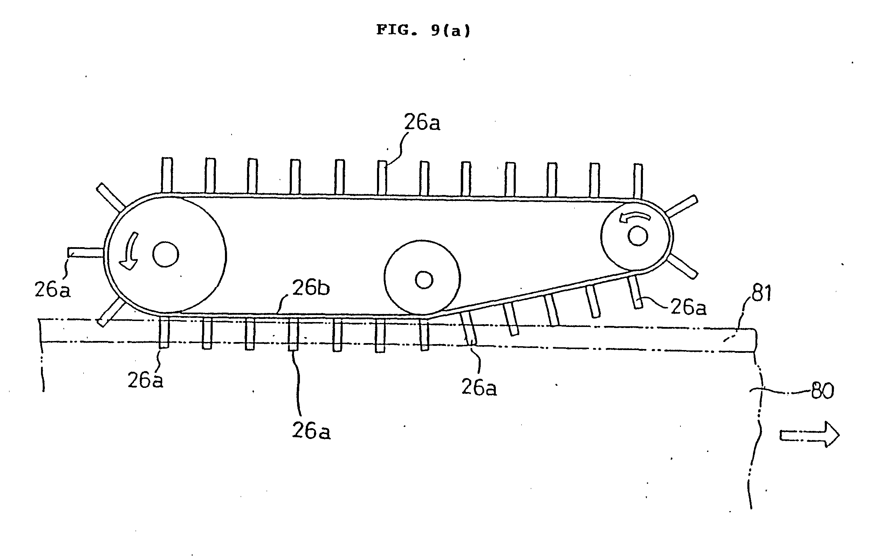

Other gathering apparata 20, as shown in Figs. 9(a) and 9(b), can be used in which an endless belt 26b that rotates is disposed at each of the selvedges of the knitting 80, and the outer surface of said endless belt 26b has rod-shaped supports 26a which have fixed intervals therebetween.

The endless belt 26b is bent in such a manner that the supports 26a touch the selvedges of the knitting 80 in the upstream direction of conveyance of the knitting 80, and are released from the knitting 80 in the downstream direction of conveyance of the knitting 80. Then, the supports 26a are disposed on the endless belt 26b in such a manner that, when they are located upstream of the direction of conveyance, they are fixed to the endless belt without shaking, and when they are located downstream of the conveyance direction (namely, when they are outside the region of conveyance of the knitting 80), they shake. The spread of the rotation of the endless belt 26b is set at the same speed as the conveyance of the knitting 80.

Pushers 27 have three pushing means 27a, 27b and 27c which fit into the spaces between four supports 26a which are placed beneath the selvedges of the knitting 80. The pushing means 27a and 27b disposed in the downstream direction of conveyance of the knitting 80 are unified as one body, and the pushing means 27c placed upstream begins to move down slightly later than the pushing means 27a and 27b and to move up at the same time as the pushing means 27a and 27b. These pushing means 27a, 27b and 27c move up and down together with the same cycle as the speed of rotation of the endless belt 26b, and they move back and forth so as to release the knitting 80 and then to push the selvedge of the knitting 80 into the space between the neighbouring supports 26a.

A receiving stand 28 is disposed at the position in which it faces the pushing means 27a, 27b, and 27c so as to sandwich the knitting 80 therebetween. A tape supply roll 23 supplies adhesive tape 83 onto said receiving stand 28. Then, the pusher 27 moves downwardly, and the two pushing means 27a and 27b in the downstream direction of the conveyance of the knitting 80 push the selvedge of the knitting 80 into the space between the supports 26a, resulting in a gather in the selvedge. At the time, the bottom part of the gather made in the selvedge of the knitting 80 touches the adhesive tape 83, and the said adhesive tape 83 is pasted onto the gathers which have been so formed. Since the pushing means 27c placed upstream from the direction of conveyance of the knitting 80 begins to move down later than the other pushing means 27a and 27b, such a movement of the pushing means 27c results in an introduction of the upstream portion of the knitting 80 into this gathering apparatus in a manner to maintain the state in which the gather has been formed by the pushing means 27a and 27b and the supports 26a is fixed to the adhesive tape 83, so that gathers can be formed in order, without losing the gathers that have been formed. Then, the pushing means 27a, 27b and 27c move up at the same time. These pushing means 27a, 27b, and 27c act repeatedly in the above-mentioned way to form gathers.

The knitting 80, which has been gathered, is conveyed forward with its selvedges fastened to the supports 26a, and the endless belt 26b moves outside the region of conveyance of the knitting 80, so the selvedge of the knitting 80 is released from the supports 26a, and the knitting 80 is conveyed forward with the adhesive tape 83 fixed onto its gathers. At this time, each support 26a shakes with respect to the endless belt 26b, and accordingly the selvedge of the knitting 80 is readily separated from the supports 26a. The gathering apparatus 20 shown in Fig. 9 readily forms gathers of a large size, and is preferably used to obtain a conductive fabric with a great degree of crimping.

The heat shrinkage of the thermoplastic fibres of the conductive fabric is described below :

First, the case in which the conductive fabric is a knitted fabric is explained. The knitted structure of knitting gives a spreading ratio, ordinarily, of 1.3 to 1.7 times, and in order to obtain a spreading ratio of two times or more, it is required that the conductive fibres provide a spreading ratio of about 1.6 times due to their crimping, i. e., the degree of crimping of 25 % or more.

Given that the degree of crimping of a thread twisted together in which there is only twisting together is $\alpha$, and given that the heat shrinkage of the thermoplastic fibres is $\beta$ when the heat shrinkage of the conductive fibres if nearly equal to 0 %, the minimum values of $\beta$ corresponding to the values of $\alpha$ that are required to obtain a degree of crimping of the conductive fibres of 25 % or more, are shown in Table 1.

Next, the case in which the conductive fabric is made from a woven fabric is explained. The structure of a woven fabric precludes any expectation of stretching, and to obtain a spreading ratio of two times or more, the degree of crimping of the conductive fibres of 45 % or more is needed. In the same way as the above-mentioned case of knitted fabric, the minimum values of $\beta$ corresponding to the values of $\alpha$ are shown in Table 2.

Table 1

| $\alpha$ (%) | $\beta$ (%) |
|---|---|
| 5 | 21 |
| 10 | 18 |
| 15 | 12 |
| 20 | 7 |

Table 2

| $\alpha$ (%) | $\beta$ (%) |
|---|---|
| 10 | 40 |
| 20 | 31 |
| 30 | 21 |
| 40 | 8 |

Next, conductive films or sheets from the conductive fabric made in this way are explained. The description below relates to the use of the conductive fabric mentioned above for either conductive sheets or films, and the said conductive fabric is an intermediate product that occurs during the manufacturing process of said conductive sheets or films from the said conductive fabric.

Plastic sheets or films made of polyolefine resin, polyamide resin, polyester resin, polyacrylonitrile resin, polyvinyl chloride resin, polycarbonate resin, polymethyl methacrylate resin, etc., can be used as a base on which the conductive fabric with the structure mentioned above is laminated. In particular, plastic sheets or films made of polyvinylchloride resin, polycarbonate resin, polymethyl methacrylate resins, etc., which have 70 % or more transparency to all kinds of light are suitable for use when the final product is transparent. It is preferable for the thermoplastic fibres in the fabric and the base resin to be made of the same resin material, which gives particularly satisfactory adhesive strength.

The layering of the conductive fabric on the base can be carried out by the disposition of the conductive fabric on the base or by the use of an adhesive as a temporary glue. Moreover, not only the conductive fabric is layered or laminated on only one side of the base, but also the fabric can be layered or laminated on both sides of the base. After lamination, the temperature is raised to the temperature at which the thermoplastic fibres melt, or higher, and while the said thermoplastic fibres are melting, the layers are pressed together so as to adhere to each other.

Direct application of heat by heated plates in a press can be used for the heating treatment, and it is also suitable to use high-frequency induction heating, etc., which makes use of the electrical conductivity of the conductive fabric. Also, as a method to apply pressure, the application of pressure with a press or the applications of pressure with a roll can be used. For example, when the thermoplastic fibres and the base are made of polyvinylchloride resin, the temperature is 130 to 190 °C, and the pressure is 5 to 50 kg/cm$^2$ (4.9 to 49 bar).

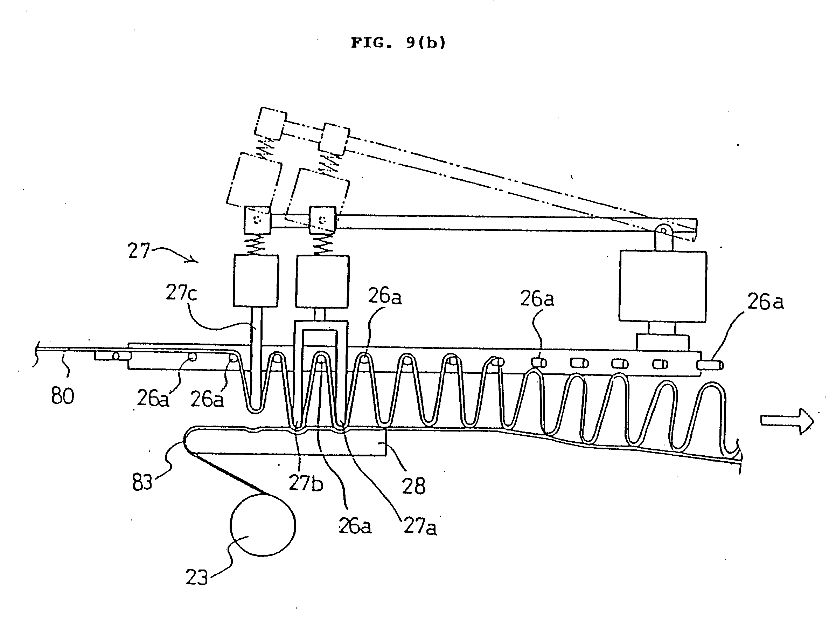

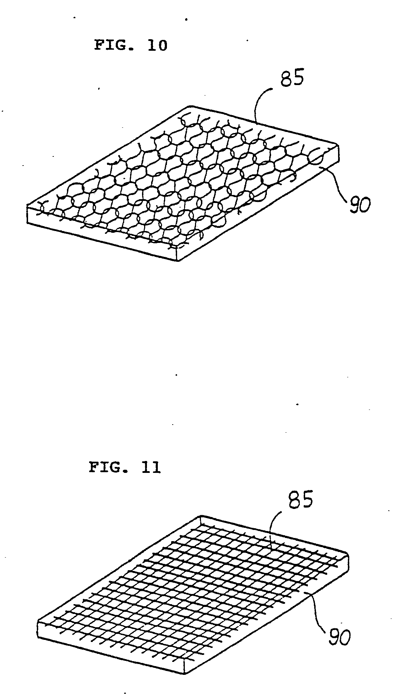

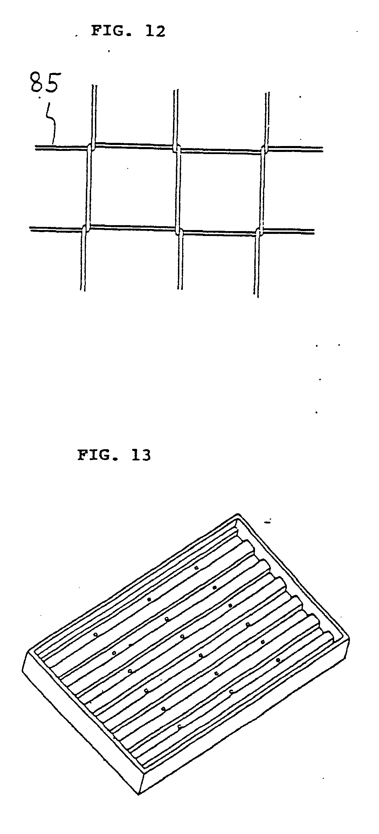

The molten base material can be fed onto the conductive fabric by an extrusion moulding technique so as to complete the layering of the conductive fabric on the base and the heating of the two layers at the same time. When the base is a thick plastic sheet, a conductive sheet can be obtained, and when the base is a thin plastic film, a conductive film can be obtained. A conductive fabric made by knitting is shown in Fig. 10 and a conductive sheet made by weaving is shown in Fig. 11, in which the reference numeral 85 denotes the conductive fibres, and 90 the base. The conductive fibres 85 are stretched from the condition shown in Fig. 1 to the stretched conditions shown in Fig. 12.

When the final product obtained should be transparent, the conductive fibres should not be like spun yarn, with poor surface smoothness, but are preferably like filaments. However, it is necessary for the smoothness of the surface of filaments not to be damaged by processing; during twisting, the smoothness is not damaged. The weight of the conductive fibres in the sheets or films is preferably 3 to 100 g/m$^2$; for example, with a thread of 40 to 60 deniers, metal fibres are preferably used with 3 to 70 g/m$^2$, and carbon fibres, synthetic resin fibres onto which metal ions have been adsorbed, or metal-plated synthetic-resin fibres are preferably used at the rate of 3 to 25 g/m$^2$, so that transparency to all light will be 40 % or more.

The electrically conductive fabric and conductive sheets or films of this invention, the products made with these, and a laminated product therof with another kind of base are useful for the following: For example, they can be used for trays, containers, and packaging of electronic devices, such as semiconductor devices, etc.; filling cases for storage of magnetic discs or magnetic cards and other kinds of recording materials; electronic or electrical products, such as personal computers, word processors, etc.; housings; partitions, etc., of office automation rooms or clean rooms, which should prevent charging by electricity and/or shield electrons therefrom.

The conductive fibres in the conductive fabric of this invention are crimped around the other fibres, so even if the said fabric is heated and stretched, there is no ripping of the fabric, and the conductivity is maintained.

In the conductive sheets or films of this invention, the conductive fibres of the fabric incorporated with the base in the molten state have been crimped, and even when the said sheets or films are treated by deep drawing processing by vacuum forming, pressure forming, or the like and a moulded article (for example, a container like that shown in Fig. 13) made from them is spread with the addition of heat to a surface area twice that of the original sheet or film, or more, the conductive fibres will not readily break, so that the conductive fibres can stretch sufficiently within the sheets or films. The conductive fibres can also act in the same manner in the conductive film of this invention.

In the method for the manufacture of the conductive fabric of this invention, the textile or the knitting, which is formed from a thread twisted together composed of a conductive fibre and a thermoplastic fibre which has a heat shrinkage greater than that of said conductive fibre, is heat-treated. By such a heat treatment, the conductive fibre, which is finally twisted into a spiral, shrinks along the longitudinal axis of the thermoplastic fibre, so that the intervals between the spirals of the conductive fibre are decreased in the longitudinal direction. As a result, the degree of crimping of the conductive fibre can be set to a desired level.

Example 1

A 50-denier acrylonitrile fibre onto which copper sulphide has been adsorbed (Nippon Sammo Dyeing Co., Ltd.; product name, « Thunderon ») and a 100-denier polyvinylchloride fibre (Teijin Co., Ltd.; product name, « Teviron », with a heat shrinkage of 30 to 40 % at 100 °C) were twisted together into a single thread, and these threads were knitted together. The knitting obtained was heat-treated at 100 °C, and then caused to adhere to both sides of a rigid polyvinylchloride plate with a thickness of 1 mm (Sekisui Chemical Co., Ltd.; product name, « Eslon plate ») by means of tetrahydrofuran. This was formed into a pressed sheet at the temperature of 170 ºC under a pressure 30 kg/cm² (29 bar). The weight of the acrylonitrile fibre with copper sulfide adsorbed thereonto in this sheet was 20 g/m². The properties of the sheet obtained were as shown in Table 3.

Example 2

The knitting of Example 1 was heat-treated at 100 ºC and then pressed at a temperature of 170 ºC under a pressure of 30 kg/cm² (29 bar) resulting in a film with a thickness of 0.1 mm. This sheet comprised, per square metre, 10 g of the acrylonitrile fibre with copper sulphide adsorbed thereonto. The properties of the film obtained were as shown in Table 3.

Example 3

A copper fibre of 50 denier (Esco Co., Ltd.; product name « Caplon ») and a polyvinylchloride fibre of 100 denier (Teijin Co., Ltd.; product name, « Teviron », with a heat shrinkage of 30 to 40 % at 100 ºC) were twisted together into a single thread, which was then knitted. The resulting knitting was treated under the same conditions as in Example 1 to give a sheet. There was, in this sheet, 30 g of copper fibre per square metre. The properties of the sheet obtained were as shown in Table 3.

Example 4

The same thread as in Example 3 was used to make a textile, and under the same conditions as in Example 1, this was made into a sheet. There was, in this sheet, 20 g of the copper fibre per square metre. The properties of the sheet obtained were as shown in Table 3.

Comparative Example 1

The copper fibre of 50 denier (Esco Co., Ltd.; product name, « Caplon ») and polyvinylchloride fibre of 100 denier (Teijin Co., Ltd.; product name, « Teviron », with a heat shrinkage of 30 to 40 % at 100 ºC) was woven into a textile fabric with the first as the warp and the second as the weft, and this textile was caused to adhere to both sides of a hard polyvinylchloride plate with a thickness of 1 mm (Sekisui Chemical Co., Ltd., product name « Eslon plate ») by means of tetrahydrofuran. This was formed into a pressed sheet at the temperature of 170 ºC under a pressure of 30 kg/cm² (29 bar). There was, in this sheet, 20 g of the copper fibre per square metre. However, the sheet obtained, when treated by deep drawing processing by vacuum forming, pressure forming, or the like, underwent cutting of its copper fibre, and the original conductivity could not be maintained.

(See Table 3 page 9)

8

Table 3

Properties of conductive sheets or films

| | Percentage crimp of conductive fibres in fabric (%) | Resistance (Ω) of surface (ohm) | Shield effect from electro-magnetic waves in the range of 100 to 1000MHz (dB) | Spreading ratio of sheets or films without changing of initial properties | Transmittance (%) |
|---|---|---|---|---|---|
| Example 1 | 30 | $10^3$ | 10 to 30 | 3.0 | 45 |
| Example 2 | 30 | $10^3$ | 10 to 30 | 3.0 | 55 |
| Example 3 | 30 | $10^2$ | 14 to 50 | 3.0 | 55 |
| Example 4 | 40 | $10^2$ | 10 to 50 | 2.7 | 55 |
| Comparative example 1 | 0 | $10^3$ | 10 to 30 | 1.0 | 55 |

Note : Percentage crimp in the table was calculated as follows by the JIS standard.

Percentage crimp (%)=100 $(l_1—l_0)/l_1$

wherein $l_0$ is the length when the tension is low and $l_1$ is the length to which stretching occurs when a tension of 50 mg is applied for 1 min per denier.

The spreading ratio in the table is shown as the surface ratio after stretching.

Claims

1. A conductive fabric characterised in that it comprises conductive fibres (85) and thermoplastic fibres (84) with a higher heat shrinkage than said conductive fibres (85), said fibres (84, 85) being twisted into at least one twisted thread such that after heat shrinkage of said thermoplastic fibres (84) has occurred in the axial direction, said conductive fibres (85) are curled in a spiral around said thermoplastic fibres (84).

2. A conductive fabric according to claim 1, wherein said conductive fibres and said thermoplastic fibres form a woven textile fabric or a knitted fabric.

3. A method for the manufacture of a conductive fabric (80) from at least one thread characterised by imparting respective initial twists to conductive fibres (85) and thermoplastic fibres (84) having a higher heat shrinkage than the conductive fibres (85), twisting the fibres into at least one twisted thread, knitting or weaving the twisted thread or threads to form a knitted or woven fabric, forming gathers or pleats of a fixed size at the selvedges of the knitted or woven fabric so as to loosen the portion of the fabric between the selvedges, and by heating the entire area of said fabric, while the gathered or pleated selvedges of said fabric are held by pin tenters, until the loose portion of said fabric is tightened due to the heat shrinkage.

4. A method for the manufacture of a conductive fabric according to claim 3, wherein the number of initial twists imparted to the thermoplastic fibres (84) is greater than the number of initial twists imparted to the conductive fibres (85).

5. A method for the manufacture of a conductive fabric according to claim 3 or 4, wherein the diameter of the thermoplastic fibres (84) is greater than that of the conductive fibres (85).

6. A conductive sheet or film characterised in that it comprises a conductive fabric composed of conductive fibres (85) and thermoplastic fibres with a higher heat shrinkage than that of the conductive fibres, said conductive fibres (85) being crimped by heat shrinkage of said thermoplastic fibres (84), and a base (90) on which said conductive fabric is disposed, and in that said conductive fabric and said base which are laminated together are fused into one piece by being heated at a temperature above the melting point of the thermoplastic fibres and melting said thermoplastic fibres.

7. A conductive sheet or film according to claim 6, wherein said conductive fabric is a knitted or woven fabric.

8. A conductive sheet or film according to claim 6 or 7, wherein said base is a sheet or film of synthetic resin.

**Patentansprüche**

1. Leitfähiges Gewebe, dadurch gekennzeichnet, daß es leitfähige Fasern (85) und thermoplastische Fasern (84) mit höherem Warmschrumpfvermögen als die leitfähigen Fasern (85) aufweist, wobei die Fasern (84, 85) zu mindestens einem verdrillten Faden derart verdrillt sind, daß nach dem Warmschrumpfen der thermoplastischen Fasern (84) in axialer Richtung die leitfähigen Fasern (85) spiralförmig um die thermoplastischen Fasern (84) gewickelt sind.

2. Leitfähiges Gewebe nach Anspruch 1, wobei die leitfähigen Fasern und die thermoplastischen Fasern ein gewebtes textiles Gewebe oder ein gestricktes Gewebe bilden.

3. Verfahren zum Herstellen eines leitfähigen Gewebes (80) aus mindestens einem Faden, dadurch gekennzeichnet, daß den leitfähigen Fasern (85) und thermoplastischen Fasern (84), die ein größeres Warmschrumpfvermögen als die leitfähigen Fasern (85) haben, eine Anfangsverdrillung verliehen wird, daß die Fasern zu mindestens einem verdrillten Faden verdrillt werden, daß der oder die verdrillten Fäden verstrickt oder verwoben werden, um ein Gestrick oder Gewebe zu bilden, daß Fältchen oder Falten von einer vorgegebenen Größe an den Kanten des Gestricks oder Gewebes gebildet werden, um den zwischen den Rändern liegenden Teil des Gewebes zu lockern, und daß der gesamte Bereich des Gewebes erhitzt wird, während die gerafften oder gefalteten Ränder des Gewebes von Nadelspannrahmen gehalten werden, bis der lockere Teil des Gewebes aufgrund des Warmschrumpfens gespannt ist.

4. Verfahren zum Herstellen eines leitfähigen Gewebes nach Anspruch 3, wobei die Anzahl der anfänglichen Verdrillungen, die den thermoplastischen Fasern (84) eingeprägt wird, größer als die Anzahl der anfänglichen Verdrillungen für die leitfähigen Fasern (85) ist.

5. Verfahren zur Herstellung eines leitfähigen Gewebes nach Anspruch 3 oder 4, wobei der Durchmesser der thermoplastischen Fasern (84) größer als der für die leitfähigen Fasern (85) ist.

6. Leitfähige Bahn oder Folie, dadurch gekennzeichnet, daß sie ein leitfähiges Gewebe bestehend aus leitfähigen Fasern (85) und thermoplastischen Fasern aufweist, die ein höheres Warmschrumpfvermögen als die leitfähigen Fasern haben, daß die leitfähigen Fasern (85) durch Warmschrumpfen der thermoplastischen Fasern (84) gekrimpft werden, und mit einer Basis (90), auf der das leitfähige Gewebe liegt, und daß das leitfähige Gewebe und die Basis, die miteinander laminiert werden, zu einem Stück verschmolzen werden, indem sie auf eine Temperatur erhitzt werden, die über dem Schmelzpunkt der thermoplastischen Fasern liegt, und daß die thermoplastischen Fasern geschmolzen werden.

7. Leitfähige Bahn oder Folie nach Anspruch 6, wobei das leitfähige Gewebe eine gestricktes oder gewebtes Gewebe ist.

8. Leitfähige Bahn oder Folie nach Anspruch 6 oder 7, wobei die Basis ein Bahn oder Folie aus Kunstharz ist.

## Revendications

1. Produit textile conducteur caractérisé en ce qu'il comporte des fibres conductrices (85) et des fibres thermoplastiques (84) présentant un retrait à chaud plus élevé que celui desdites fibres conductrices (85), lesdites fibres (84, 85) étant retordues pour donner au moins un fil retordu tel qu'après que le retrait à chaud desdites fibres thermoplastiques (84) s'est produit dans la direction axiale, lesdites fibres conductrices (85) sont enroulées en spirale autour desdites fibres thermoplastiques (84).

2. Produit textile conducteur selon la revendication 1, caractérisé en ce que lesdites fibres conductrices et lesdites fibres thermoplastiques forment un produit textile tissé ou un produit textile tricoté.

3. Procédé de fabrication d'un produit textile conducteur (80) à partir d'au moins un fil, caractérisé par le fait de donner des torsions initiales respectives à des fibres conductrices (85) et à des fibres thermoplastiques (84) présentant un retrait à chaud supérieur à celui des fibres conductrices (85), de retordre les fibres pour donner au moins un fil retordu, à tricoter ou à tisser le fil retordu ou les fils retordus pour former un produit textile tricoté ou tissé, de former des fronces ou des plissés de dimension fixe aux lisières dudit produit textile tricoté ou tissé de façon à rendre lâche la portion de produit textile située entre les lisières, et de chauffer toute la surface dudit produit textile tandis que les lisières foncées ou plissées dudit produit textile sont maintenues par des picots, jusqu'à ce que la portion lâche dudit produit textile se resserre par suite du retrait à chaud.

4. Procédé de fabrication d'un produit textile conducteur selon la revendication 3, caractérisé en ce que le nombre de tours de torsion initiaux donnés aux fibres thermoplastiques (84) est supérieur au nombre de tours de torsion initiaux donnés aux fibres conductrices (85).

5. Procédé de fabrication d'un produit textile conducteur selon la revendication 3 ou 4, caractérisé en ce que le diamètre des fibres thermoplastiques (84) est supérieur à celui des fibres conductrices (85).

6. Feuille ou film conducteur caractérisé en ce qu'il comporte un produit textile conducteur constitué des fibres conductrices (85) et de fibres thermoplastiques présentant un retrait à chaud supérieur à celui des fibres conductrices, lesdites fibres conductrices (85) formant des boucles par retrait à chaud desdites fibres thermoplastiques (84), ainsi que d'une base (90) sur laquelle ledit produit textile conducteur est déposé, et en ce que l'on porte à la fusion le produit textile conducteur et ladite base qui sont stratifiés ensemble pour donner une seule pièce en chauffant à une température supérieure au point de fusion des fibres thermoplastiques et en faisant fondre lesdites fibres thermoplastiques.

7. Feuille ou film conducteur selon la revendication 6, caractérisé en ce que ledit produit textile conducteur est un produit textile tricoté ou tissé.

8. Feuille ou film conducteur selon la revendication 6 ou 7, caractérisé en ce que ladite base est une feuille ou un film de résine synthétique.

FIG. 1

85    84

80

FIG. 3

W    W

C ----    ---- C
C ----    ---- C

W    W

FIG. 2

FIG. 4.

FIG. 5

FIG. 6

FIG. 7

FIG. 8

FIG. 9(a)

EP 0 243 193 B1

FIG. 9(b)

FIG. 10

85

90

FIG. 11

85

90

FIG. 12

85

FIG. 13